# EUROPÄISCHE PATENTSCHRIFT

(11) **EP 1 213 045 B1**
(45) Veröffentlichungstag und Bekanntmachung des Hinweises auf die Patenterteilung: **31.05.2006**
(21) Anmeldenummer: 01128684.6
(22) Anmeldetag: 01.12.2001
(51) Int. Cl.: B01D 46/52, B01D 29/07

(54) **Verfahren zur Herstellung eines Filtereinsatzes**
Process for producing a filter insert
Procédé pour produire un élément filtrant

(30) Priorität: 08.12.2000 DE 10061479
(43) Veröffentlichungstag der Anmeldung: 12.06.2002
(73) Patentinhaber: Carl Freudenberg KG, 69469 Weinheim (DE)
(72) Erfinder: Hintenlang, Dieter, 69518 Abtsteinach (DE); Unrath, Dieter, 69469 Weinheim (DE); Wiegand, Hans, 64658 Fürth (DE)

(56) Entgegenhaltungen:
- DE-A- 2 842 127
- US-A- 4 619 675
- PATENT ABSTRACTS OF JAPAN vol. 12, no. 391, 18. Oktober 1988 (1988-10-18) & JP 63 137720 A (NIPPON ROKAKI KK), 9. Juni 1988 (1988-06-09)
- PATENT ABSTRACTS OF JAPAN vol. 1995, no. 8, 29. September 1995 (1995-09-29) & JP 07 112109 A (JAPAN VILENE CO), 2. Mai 1995 (1995-05-02)

## Beschreibung

Die Erfindung betrifft ein Verfahren zur Herstellung eines im Wesentlichen kreisringförmig ausgebildeten Filtereinsatzes, mit sich in radialer Richtung erstreckenden Falten, bei dem zunächst ein Filterwerkstoff zu einer rechteckigen Filterplatte mit quer zur Längsrichtung angeordneten Falten plissiert wird, die Filterplatte in eine kreisringförmige Gestalt gebracht und die einander in Umfangsrichtung benachbarte erste und letzte Falte der Filterplatte miteinander verbunden werden.

### Stand der Technik

Kreisringförmig ausgebildete Filtereinsätze sowie Verfahren zu deren Herstellung sind allgemein bekannt.
Aus der J 63137720 A ist ein Verfahren zur Herstellung eines kreisringförmig ausgebildeten Filtereinsatzes bekannt, wobei der Filtereinsatz sich in radialer Richtung erstreckende Falten aufweist. Bei dem vorbekannten Verfahren wird zunächst ein Filterwerkstoff zu einer rechteckigen Filterplatte mit quer zur Längsrichtung angeordneten Falten plissiert. Anschließend werden die Falten aufgefächert und in eine kreisringförmige Gestalt gebracht. Dazu wird der plissierte Filterwerkstoff in einen kreisringförmigen Stützkörper eingefügt, der den plissierten Filterwerkstoff dann außenumfangsseitig umschließt.

Anschließend wird der radial innere, kreisförmige Hohlraum durch einen Kunststoff dichtend verschlossen.

Ein weiteres Verfahren ist aus der DE 28 42 127 A1 bekannt. Die vorbekannte Filterpatrone weist sich in radialer Richtung erstreckende Falten auf, die radial innenseitig durch einen inneren Ringteil und radial außenseitig durch einen äußeren Ringteil begrenzt sind. Die Ringteile sind jeweils aus einem Blech hergestellt, wobei der innere Ringteil eine innere freie zylindrische Zone begrenzt. Der vorbekannte Filtereinsatz wird derart hergestellt, dass zunächst die Ringteile und eine rechteckige, plissierte Filterplatte getrennt hergestellt werden, wobei die rechteckige Filterplatte anschließend zu einem Ring geformt wird. Auf das innere Ringteil wird ein Kleber aufgebracht, der das innere Ringteil mit den radial inneren Stirnseiten der Falten der kreisringförmigen Filterplatte verbindet. Der äußere Ringteil wird innenumfangsseitig mit einem Haftmittel versehen und über die kreisringförmige Filterplatte geschoben.

Die zuvor beschriebenen Verfahren sind in fertigungstechnischer Hinsicht nachteilig, insbesondere ist der Verfahrensschritt aufwändig, in dem die zunächst rechteckige, plissierte Faltenplatte in eine kreisringförmige Gestalt gebracht wird.

### Darstellung der Erfindung

Der Erfindung liegt die Aufgabe zugrunde, ein Verfahren zur Herstellung eines im Wesentlichen kreisringförmig ausgebildeten Filtereinsatzes zu zeigen, das einfach und wirtschaftlich durchführbar ist.

Diese Aufgabe wird erfindungsgemäß durch die Merkmale von Anspruch 1 gelöst. Auf eine vorteilhafte Weiterbildung des Verfahrens nehmen die Unteransprüche Bezug.

Die Aufgabe wird dadurch gelöst, dass die Filterplatte dadurch in eine kreisringförmige Gestalt gebracht wird, dass die Filterplatte um einen zylindrischen und im fertiggestellten Filtereinsatz verbleibenden Kern gelegt wird.

Hierbei ist von Vorteil, dass die Herstellung des kreisringförmigen Filtereinsatzes mit sich in radialer Richtung erstreckenden Falten besonders einfach ist. Bei der Herstellung des Filtereinsatzes entstehen keine Abfälle, da es bei dem erfindungsgemäßen Verfahren keinen Verschnitt gibt.

Nach einer vorteilhaften Weiterbildung des Verfahrens kann es vorgesehen sein, dass die Filterplatte vor der Erzeugung der kreisringförmigen Gestalt zumindest einmal in Längsrichtung zur Ausbildung von wenigstens zwei Teil-Filterplatten durchgetrennt wird, welche dann jeweils in die kreisringförmige Gestalt gebracht werden. Hierbei ist von Vorteil, dass eine rechteckige Filterplatte mit quer zur Längsrichtung plissierten Falten die Basis für zumindest zwei Filtereinsätze bildet. Das Durchtrennen der Filterplatte in Längsrichtung im zweiten Verfahrensschritt lässt sich schneller durchführen, als das erneute Plissieren einer rechteckigen Filterplatte, so dass es im Hinblick auf eine möglichst rasche Herstellung möglichst vieler Filtereinsätze immer vorteilhafter ist, die Filterplatte in Längsrichtung gemäß dem zweiten Verfahrensschritt zu durchtrennen, als eine passend dimensionierte weitere rechteckige Filterplatte gemäß dem ersten Verfahrensschritt zu erzeugen. Die Verbindung der in Umfangsrichtung benachbarten ersten und letzten Falte einer jeden Teil-Filterplatte kann beispielsweise dadurch erfolgen, dass die erste und die letzte Falte miteinander verklebt oder verschweißt werden. Durch die sich in radialer Richtung erstreckenden Falten weist der nach dem beanspruchten Verfahren hergestellte Filtereinsatz im Vergleich zu aus Schaumstoff bestehenden Filtereinsätzen eine große Filterfläche auf. Dadurch wird ein gutes Filterergebnis während einer langen Gebrauchsdauer erreicht.

Der Kern kann geschäumt sein und beispielsweise aus Polyurethan bestehen. Dabei besteht generell die Möglichkeit, dass der Kern an die radial angrenzenden Stirnseiten der Falten strömungsdicht angeschäumt wird. Der Kern und die radial angrenzenden Stirnseiten der Falten sind bevorzugt strömungsdicht miteinander verbunden. Der Kern und die radial inneren Stirnseiten der Falten können kraft- und / oder formschlüssig miteinander verbunden sein.

Der Kern, um den eine Teil-Filterplatte gelegt wird, kann beispielsweise durch einen Voll-Zylinder oder durch einen Hohlzylinder gebildet sein. Der Kern besteht bevorzugt aus einem polymeren Werkstoff. Dadurch weist der Filtereinsatz insgesamt ein nur geringes Gewicht auf und ist rostfrei, so dass der Filtereinsatz ohne Nachteile auch bei hoher Luftfeuchtigkeit zum Einsatz gelangen kann.

Für Anwendungsfälle, in denen ein hoher Reinheitsgrad des gefilterten Mediums verlangt wird, kann es vorteilhaft sein, wenn der Kern beispielsweise aus einem geschlossenzelligen Schaumstoff besteht und die radial angrenzenden Stirnseiten der Falten unter elastischer Vorspannung dichtend berührt. Einer separaten Abdichtung und / oder Befestigung in diesem Bereicht bedarf es daher nicht.

Die Herstellung des Filtereinsatzes kann dadurch vereinfacht werden, dass eine Längsseite der Filterplatte und/oder eine Längsseite der Teil-Filterplatten mit einer Kante strömungsdicht verbunden werden. Die Kante umschließt dabei den gebrauchsfertigen Filtereinsatz außenumfangsseitig und kann beispielsweise durch die an sich bekannte Kantenleimtechnik oder eine Ultraschall-Verschweißung auf die Stirnseite der Filterplatte aufgebracht werden.

Besonders vorteilhaft ist es, wenn beide Längsseiten der Filterplatte vor der Durchtrennung in Längsrichtung mit jeweils einer Kante strömungsdicht verbunden werden. Hierbei ist von Vorteil, dass nach der Durchtrennung in Längsrichtung im zweiten Verfahrensschritt die beiden Teil-Filterplatten jeweils auf einer Seite mit der Kante verbunden sind, die später den Außenumfang des gebrauchsfertigen Filtereinsatzes bildet. Die Seite der Teil-Filterplatten, die der Trennfuge zugewandt sind, bilden demgegenüber den Innenumfang des kreisringförmigen Filtereinsatzes, sind dem Kern zugewandt und werden bedarfsweise mit diesem strömungsdicht verbunden.

Der Kern kann vor dem dritten Verfahrensschritt mit einem Dichtungswerkstoff außenumfangsseitig ummantelt werden, wobei als Dichtungswerkstoff beispielsweise ein geschlossenzelliger Schaumstoff als Ummantelung aufgespritzt oder aufgeklebt werden kann. Die Ummantelung des Kerns ist dann von Vorteil, wenn gefordert ist, dass die Falten radial innen den Kern dichtend berühren sollen, um eine verbesserte Filterwirkung zu erzielen.

### Kurzbeschreibung der Zeichnung

Das erfindungsgemäße Verfahren wird nachfolgend anhand der Figuren 1 bis 3 näher erläutert.

Diese zeigen jeweils in schematischer Darstellung:
- Fig. 1: die rechteckige Filterplatte nach dem ersten Verfahrensschritt und die Schnittlinie, entlang der die Filterplatte gemäß dem zweiten Verfahrensschritt durchtrennt wird,
- Fig. 2: eine der Teil-Filterplatten, die gemäß drittem Verfahrensschritt um einen Kern gelegt wird und
- Fig. 3: den gebrauchfertigen, kreisringförmig ausgebildeten Filtereinsatz nach Durchführung des vierten Verfahrensschritts.

### Ausführung der Erfindung

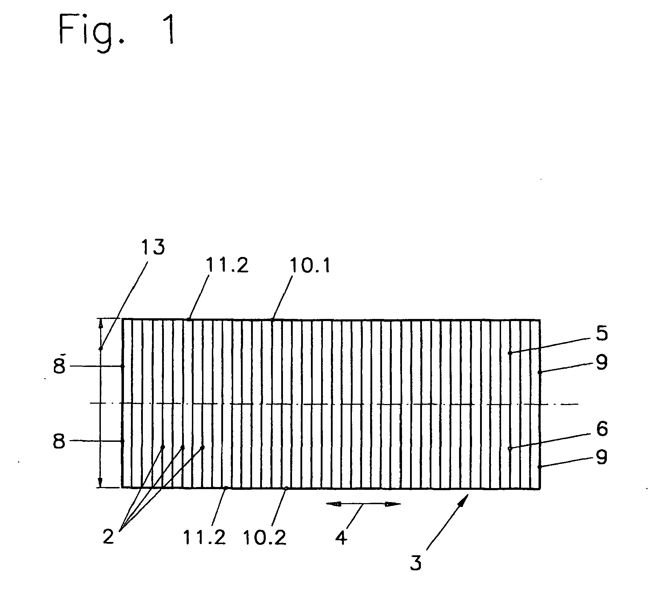

In Fig. 1 ist eine rechteckige Filterplatte 3 gezeigt, wobei die quer zur Längsrichtung 4 angeordneten Falten 2 im ersten Verfahrensschritt durch Plissieren erzeugt werden.

In diesem Ausführungsbeispiel entspricht die Breite 13 der Filterplatte 3 im Wesentlichen der doppelten Breite des gebrauchsfertigen, kreisringförmigen Filtereinsatzes 1, sodass aus der hier dargestellten Filterplatte 3 zwei Teil-Filterplatten 5, 6 herstellbar sind, die später jeweils zu dem kreisringförmig ausgebildeten Filtereinsatz 1 zusammengebaut werden.
Bevor die Filterplatte 3 im zweiten Verfahrensschritt in Längsrichtung 4 durchtrennt wird, um die beiden Teil-Filterplatten 5, 6 zu erhalten, wird auf die beiden Längsseiten 10.1, 10.2 der Filterplatte 3 im Anschluss an das Plissieren jeweils eine Kante strömungsdicht aufgebracht. Die Kanten 11.1, 11.2 bilden bei dem gebrauchsfertigen, ringförmigen Filtereinsatz den Außenumfang und dichten gegenüber einem hier nicht dargestellten Filtergehäuse ab.

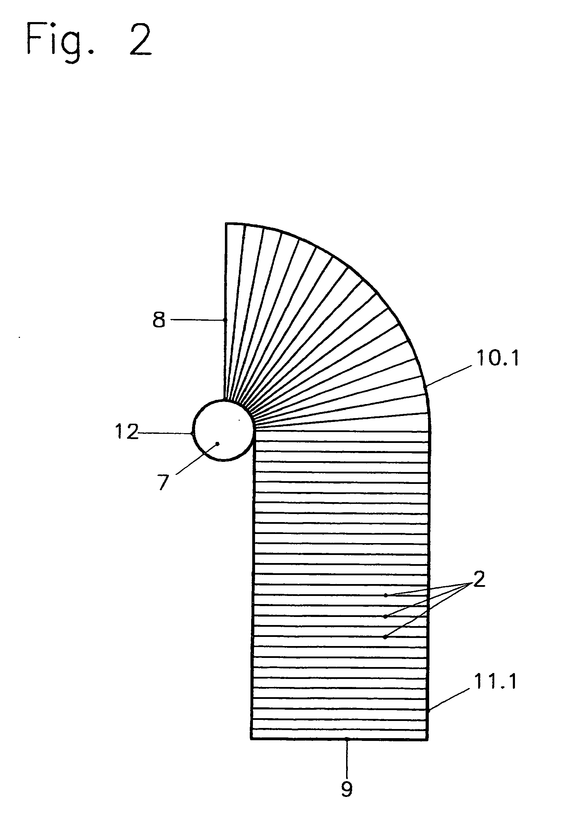

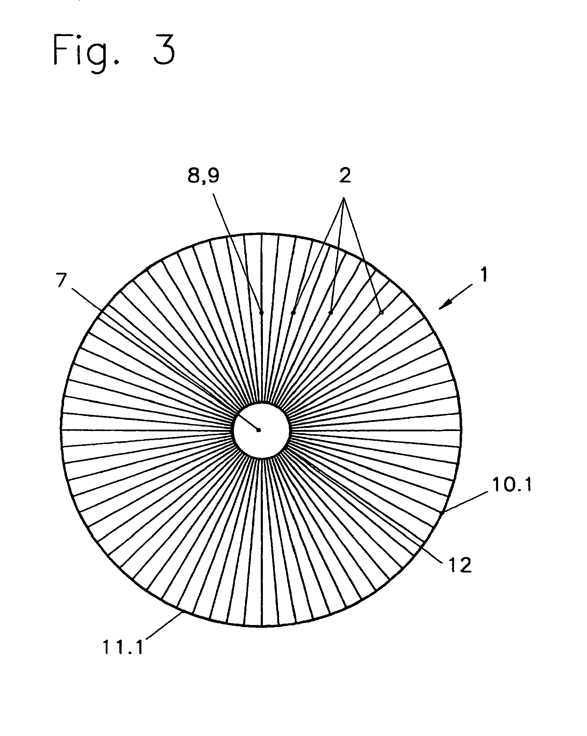

Nachdem die Filterplatte 3 im zweiten Verfahrensschritt in Längsrichtung 4 durchtrennt wurde und dadurch die beiden Teil-Filterplatten 5, 6 entstanden sind, werden diese jeweils, wie in Fig. 2 gezeigt, im dritten Verfahrensschritt um den Kern 7 gelegt. Die Teil-Filterplatten 5, 6 umschließen den Kern 7, wie in Fig. 3 gezeigt, vollständig, wobei im vierten Verfahrensschritt die erste Falte 8 und die letzte Falte 9 der jeweiligen Teil-Filterplatten 5, 6 miteinander verbunden werden. Die Verbindung erfolgt beispielsweise durch eine Verklebung oder Verschweißung.

Der Kern 7 wurde in diesem Ausführungsbeispiel außenumfangsseitig mit einem Dichtungswerkstoff ummantelt, wobei der Dichtungswerkstoff beispielsweise durch einen geschlossenzelligen Schaumstoff gebildet sein kann. Die innere Längsseite der Teil-Filterplatten 5, 6 berühren den Dichtungswerkstoff 12, um einen Strömungs-Kurzschluss zwischen der Anströmseite und Abströmseite zu vermeiden.

## Patentansprüche

1. Verfahren zur Herstellung eines kreisringförmig ausgebildeten Filtereinsatzes (1) mit sich in radialer Richtung erstreckenden Falten (2), bei dem zunächst ein Filterwerkstoff zu einer rechteckigen Filterplatte (3) mit quer zur Längsrichtung (4) angeordneten Falten (2) plissiert wird, die Filterplatte (3) in eine kreisringförmige Gestalt gebracht und die einander in Umfangsrichtung benachbarte erste (8) und letzte Falte (9) der Filterplatte (3) miteinander verbunden werden, **dadurch gekennzeichnet, dass** die Filterplatte (3) **dadurch** in eine kreisringförmige Gestalt gebracht wird, dass die Filterplatte (3) um einen zylindrischen und im fertig gestellten Filtereinsatz (1) verbleibenden Kern (7) gelegt wird.

2. Verfahren zur Herstellung eines Filtereinsatzes (1) nach Anspruch 1, **dadurch gekennzeichnet, dass** die Filterplatte (3) vor der Erzeugung der kreisringförmigen Gestalt zumindest ein mal in Längsrichtung (4) zur Ausbildung von wenigstens zwei Teil-Filterplatten (5, 6) durchgetrennt wird, welche dann jeweils in die kreisringförmige Gestalt gebracht werden.

3. Verfahren nach einem der Ansprüche 1 oder 2, **dadurch gekennzeichnet, dass** eine Längsseite (10) der Filterplatte (3) und / oder eine Längsseite der Teil-Filterplatten (5, 6) mit einer Kante (11) strömungsdicht verbunden werden.

4. Verfahren nach Anspruch 2, **dadurch gekennzeichnet, dass** beide Längsseiten (10.1, 10.2) der Filterplatte (3) vor der Durchtrennung in Längsrichtung mit jeweils einer Kante (11.1, 11.2) strömungsdicht verbunden werden.

5. Verfahren nach einem der Ansprüche 1 bis 4, **dadurch gekennzeichnet, dass** der Kern (7) mit einem Dichtungswerkstoff (12) außenumfangsseitig ummantelt wird.

6. Verfahren nach Anspruch 5, **dadurch gekennzeichnet, dass** als Dichtungswerkstoff (12) ein geschlossenzelliger Schaumstoff aufgespritzt wird.

7. Verfahren nach einem der Ansprüche 1 bis 6, **dadurch gekennzeichnet, dass** der Kern (7) und die radial angrenzenden Stirnseiten der Falten (2) strömungsdicht verbunden werden.

8. Verfahren nach einem der Ansprüche 1 bis 7, **dadurch gekennzeichnet, dass** der Kern (7) an die radial inneren Stirnseiten der Falten (2) strömungsdicht angeschäumt wird.

9. Verfahren nach einem der Ansprüche 1 bis 8, **dadurch gekennzeichnet, dass** der Kern (7) und die radial inneren Stirnseiten der Falten (2) kraft-und / oder formschlüssig verbunden werden.

## Claims

1. Process for producing a filter insert (1) of an annular form, with folds (2) extending in the radial direction, in which firstly a filter material with a rectangular filter plate (3) is pleated with folds (2) arranged transversely in relation to the longitudinal direction (3), the filter plate (3) is brought into an annular shape and the first fold (8) and last fold (9) of the filter plate (3) neighbouring each other in the circumferential direction are connected to each other, **characterized in that** the filter plate (3) is brought into an annular shape by the filter plate (3) being placed around a cylindrical core (7) remaining in the completed filter insert (1).

2. Process for producing a filter insert (1) according to Claim 1, **characterized in that**, before producing the annular shape, the filter plate (3) is severed at least once in the longitudinal direction (4) to form at least two part filter plates (5, 6), which are then respectively brought into the annular shape.

3. Process according to either of Claims 1 and 2, **characterized in that** one longitudinal side (10) of the filter plate (3) and/or one longitudinal side of the part filter plates (5, 6) is connected to an edge (11) with a flow seal.

4. Process according to Claim 2, **characterized in that**, before the severing in the longitudinal direction, both longitudinal sides (10.1, 10.2) of the filter plate (3) are respectively connected to an edge (11.1, 11.2) with a flow seal.

5. Process according to one of Claims 1 to 4, **characterized in that** the core (7) is sheathed with a sealing material (12) on the outer circumference.

6. Process according to Claim 5, **characterized in that** a closed-cell foam is sprayed on as the sealing material (12).

7. Process according to one of Claims 1 to 6, **characterized in that** the core and the radially adjacent end faces of the folds (2) are connected with a flow seal.

8. Process according to one of Claims 1 to 7, **characterized in that** the core (7) is foamed onto the radially inner end faces of the folds (2) with a flow seal.

9. Process according to one of Claims 1 to 8, **characterized in that** the core (7) and the radially inner end faces of the folds (2) are connected with non-positive and/or positive engagement.

## Revendications

1. Procédé de production d'un élément filtrant (1) réalisé sous forme d'anneau circulaire avec des plis (2) s'étendant dans la direction radiale, dans lequel un matériau de filtre est d'abord plissé pour former une plaque de filtre rectangulaire (3) avec des plis (2) disposés transversalement à la direction longitudinale (4), la plaque de filtre (3) est mise en forme d'anneau circulaire et les premier (8) et dernier (9) plis voisins l'un de l'autre dans la direction périphérique de la plaque de filtre (3) sont connectés l'un à l'autre, **caractérisé en ce que** la plaque de filtre (3) est mise en forme d'anneau circulaire en plaçant la plaque de filtre (3) autour d'un noyau cylindrique (7) restant dans l'élément filtrant posé fini (1).

2. Procédé de production d'un élément filtrant (1) selon la revendication 1, **caractérisé en ce que** la plaque de filtre (3) est séparée avant la création de la forme en anneau circulaire au moins une fois dans la direction longitudinale (4) pour créer au moins deux plaques de filtre partielles (5, 6) qui sont alors chacune mise en forme d'anneau circulaire.

3. Procédé selon l'une quelconque des revendications 1 ou 2, **caractérisé en ce qu'**un côté longitudinal (10) de la plaque de filtre (3) et/ou un côté longitudinal des plaques de filtre partielles (5, 6) sont connectés de manière étanche à l'écoulement avec une arête (11).

4. Procédé selon la revendication 2, **caractérisé en ce que** les deux côtés longitudinaux (10.1, 10.2) de la plaque de filtre (3) sont connectés de manière étanche à l'écoulement avant la séparation dans la direction longitudinale, avec une arête respective (11.1, 11.2).

5. Procédé selon l'une quelconque des revendications 1 à 4, **caractérisé en ce que** le noyau (7) est enveloppé du côté de la périphérie extérieure par un matériau d'étanchéité (12).

6. Procédé selon la revendication 5, **caractérisé en ce qu'**une mousse à alvéoles fermées est pulvérisée en tant que matériau d'étanchéité (12).

7. Procédé selon l'une quelconque des revendications 1 à 6, **caractérisé en ce que** le noyau (7) et les côtés frontaux radialement adjacents des plis (2) sont connectés de manière étanche à l'écoulement.

8. Procédé selon l'une quelconque des revendications 1 à 7, **caractérisé en ce que** le noyau (7) est moussé de manière étanche à l'écoulement au niveau des côtés frontaux radialement internes des plis (2).

9. Procédé selon l'une quelconque des revendications 1 à 8, **caractérisé en ce que** le noyau (7) et les côtés frontaux radialement internes des plis (2) sont connectés par engagement par force et/ou par coopération de forme.
